(19) Europäisches Patentamt
European Patent Office
Office européen des brevets

(11) **EP 3 724 979 B1**

(12) **EUROPÄISCHE PATENTSCHRIFT**

(45) Veröffentlichungstag und Bekanntmachung des Hinweises auf die Patenterteilung:
**06.10.2021 Patentblatt 2021/40**

(21) Anmeldenummer: **18815188.0**

(22) Anmeldetag: **06.12.2018**

(51) Int Cl.:
***H02M 3/158*** (2006.01)     ***H02M 1/00*** (2006.01)

(86) Internationale Anmeldenummer:
**PCT/EP2018/083780**

(87) Internationale Veröffentlichungsnummer:
**WO 2019/115341 (20.06.2019 Gazette 2019/25)**

(54) **VERFAHREN ZUM BETRIEB EINES SPANNUNGSWANDLERS, SPANNUNGSWANDLER**

METHOD FOR OPERATING A VOLTAGE TRANSFORMER, VOLTAGE TRANSFORMER

PROCÉDÉ DE FONCTIONNEMENT D'UN CONVERTISSEUR DE TENSION, CONVERTISSEUR DE TENSION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.12.2017 DE 102017222697
10.07.2018 DE 102018211411**

(43) Veröffentlichungstag der Anmeldung:
**21.10.2020 Patentblatt 2020/43**

(73) Patentinhaber: **Vitesco Technologies Germany GmbH
30165 Hannover (DE)**

(72) Erfinder: **EHRMANN, Martin
81737 München (DE)**

(74) Vertreter: **Waldmann, Georg Alexander et al
Vitesco Technologies GmbH
Postfach 12 02
82019 Taufkirchen (DE)**

(56) Entgegenhaltungen:
**DE-A1-102013 218 228     DE-A1-102015 219 850
US-A- 5 734 258**

EP 3 724 979 B1

**Beschreibung**

Technisches Gebiet:

Die vorliegende Erfindung betrifft ein Verfahren zum Betrieb eines bidirektionalen Spannungswandlers sowie einen bidirektionalen Spannungswandler.

Stand der Technik und Aufgabe der Erfindung:

Spannungswandler zur bidirektionalen Spannungswandlung mit H-Brücken sind bekannt und werden unter anderem im Automobilbereich verwendet.

Die Druckschrift DE 10 2013 218228 A1 beschreibt einen Gleichspannungswandler mit einem ersten Gleichspannungstor, einem zweiten Gleichspannungstor und einer Speicherdrossel. Die Speicherdrossel ist mittels elektrischer Schaltelemente zwischen dem ersten Gleichspannungstor und dem zweiten Gleichspannungstor gekoppelt. Der Gleichspannungswandler ist so ausgelegt, dass sich eine Richtung eines Stromflusses durch die Speicherdrossel während einer Schaltperiode der elektrischen Schaltelemente zumindest einmal umdreht. Der Gleichspannungswandler ist ferner ausgelegt, um bei einer Veränderung von Betriebsparametern des Gleichspannungswandlers eine Schaltfrequenz der elektrischen Schaltelemente derart nachzuregeln, dass ein Richtungswechsel des Stromflusses durch die Speicherdrossel während einer Schaltperiode der elektrischen Schaltelemente gewährleistet wird.

Die Druckschrift DE 10 2015 219850 A1 beschreibt eine Vorrichtung zum Steuern eines schaltenden Gleichspannungswandlers mit einer ersten Halbbrückenschaltung umfassend einen ersten Schalter und einen zweiten Schalter, mit einer zweiten Halbbrückenschaltung umfassend einen dritten Schalter und einen vierten Schalter, und mit einer Induktivität, die zwischen den Mittenabgriffen der ersten und der zweiten Halbbrückenschaltung geschaltet ist. Die Vorrichtung umfasst ferner eine Steuereinheit, die ausgebildet ist, abhängig von einer Eingangsspannung und einer Ausgangsspannung an dem schaltenden Gleichspannungswandler eine Schaltfrequenz der Schalter des Gleichspannungswandlers, die Tastverhältnisse des ersten und vierten Schalters und die Zeitverzögerung zwischen dem Einschalten des ersten und des vierten Schalters anzupassen.

Die Druckschrift US 5 734 258 A beschreibt einen bidirektionalen Buck-Boost-Wandler und ein Verfahren zu dessen Betrieb. Mit dem Verfahren bzw. dem Wandler wird ein Leistungsfluss zwischen zwei Spannungsquellen reguliert.

Dabei besteht die allgemeine Anforderung, die Spannungswandler möglichst verlustleistungsarm zu betreiben.

Damit besteht die Aufgabe der vorliegenden Erfindung darin, eine Möglichkeit bereitzustellen, mit der die Verlustleistung eines bidirektionalen Spannungswandlers reduziert werden kann.

Beschreibung der Erfindung:

Diese Aufgabe wird durch Gegenstände der unabhängigen Ansprüche gelöst. Vorteilhafte Ausgestaltungen sind Gegenstand der Unteransprüche.

Gemäß einem ersten Aspekt der Erfindung wird ein Verfahren zum Betrieb eines bidirektionalen Spannungswandlers, insb. eines bidirektionalen Gleichspannungswandlers, bereitgestellt, der eine eingangsseitige Halbbrückenschaltung mit jeweils einem positivspannungsseitigen und einem negativspannungsseitigen zueinander in Reihe geschalteten Transistorschalter, eine ausgangsseitige Halbbrückenschaltung mit jeweils einem positivspannungsseitigen und einem negativspannungsseitigen zueinander in Reihe geschalteten Transistorschalter, sowie einen Brückenzweig zwischen Mittelabgriffen der beiden Halbbrückenschaltungen mit einer Brückeninduktivität L, bzw. in Form von einer Spule, umfasst.

Gemäß dem Verfahren wird für einen jeweiligen nachfolgenden Schaltzyklus T1 der Transistorschalter in einem jeweiligen aktuellen Schaltzyklus T0 ein Brückenstrom-Istmittelwert IL_avg_mess eines in dem jeweiligen aktuellen Schaltzyklus T0 durch den Brückenzweig fließenden Brückenstromes gemessen bzw. ermittelt. Der Brückenstrom-Istmittelwert IL_avg_mess ist dabei der arithmetische Mittelwert des im aktuellen Schaltzyklus T0 gemessenen Brückenstromes.

Mit (bzw. basierend auf) dem ermittelten Brückenstrom-Istmittelwert IL_avg_mess werden dann Einschaltzeitpunkte und Einschaltdauern der jeweiligen Transistorschalter für den jeweiligen nachfolgenden Schaltzyklus T1 ermittelt. Die jeweiligen Transistorschalter werden dann in dem jeweiligen nachfolgenden Schaltzyklus T1 zu den jeweiligen ermittelten Einschaltzeitpunkten und für die jeweiligen ermittelten Einschaltdauern eingeschaltet.

Ferner wird in dem jeweiligen aktuellen Schaltzyklus T0 ein Brückenstrom-Momentanwert Istart1a, Istart1b; Istart2a, Istart2b; Istart3a, Istart3b des Brückenstromes gemessen bzw. ermittelt, der zum Zeitpunkt durch den Brückenzweig fließen soll, zu dem einer der Transistorschalter von einem eingeschalteten Zustand in einen ausgeschalteten Zustand umgeschaltet wird. Die Einschaltzeitpunkte und die Einschaltdauern werden dann ferner mit dem ermittelten Brückenstrom-Momentanwert Istart1a, Istart1b; Istart2a, Istart2b; Istart3a, Istart3b ermittelt. Dabei hat der Brückenstrom-Momentanwert insb. stets ein anderes Vorzeichen als der Brückenstrom-Sollmittelwert.

Hierbei ist der Brückenstrom-Momentanwert ein Augenblickswert, der im aktuellen Schaltzyklus T0 unmittelbar vor Ausschalten eines der Transistorschalter erreicht wird, um die natürliche Kommutierung sicherzustellen.

Der Erfindung liegt der Gedanke zugrunde, dass die Schaltverluste bei den Transistorschaltern einen überwiegenden Anteil der gesamten Verlustleistung bei einem Spannungswandler darstellen.

Um die gesamte Verlustleistung zu reduzieren, sollten die Schaltverluste in allen Arbeitspunkten des Spannungswandlers reduziert bzw. möglichst weitgehend eliminiert werden. Da die Arbeitspunkte wiederum vom Brückenstrom abhängig sind, wird der Brückenstrom zur Ermittlung der Einschaltzeitpunkte und der Einschaltdauern herangezogen. Da der Brückenstrom wiederum über den gesamten Schaltzyklus sich verändert, wird ein Ist-Mittelwert des Brückenstromes IL_avg_mess zur Ermittlung herangezogen. Die basierend auf diesem Brückenstrom-Istmittelwert IL_avg_mess ermittelten Einschaltzeitpunkte und Einschaltdauern stellen sicher, dass bei Ausschalten eines der Transistoren ein Brückenstrom mit einem vorab definierten Momentanstromwert durch die Brückeninduktivität fließt, der eine natürliche Kommutierung auf einen potentialmäßig dem auszuschaltenden Transistorschalter gegenüberliegenden Transistorschalter garantiert. Das Einschalten jedes der Transistorschalter erfolgt dabei immer nach erfolgter natürlicher Kommutierung, wenn die Spannung ca. 0 Volt an dem jeweiligen einzuschalteten Transistorschalter anliegt ("Zero Voltage Switching"). Das Verfahren stellt dabei das "Zero Voltage Switching" unabhängig von der Eingangsspannung, der Ausgangsspannung, der Stromrichtung und dem Strombetrag sicher.

Damit ist eine Möglichkeit bereitgestellt, die Verlustleistung eines bidirektionalen Spannungswandlers zu reduzieren.

Insb. werden die Transistorschalter mit pulsweitenmodulierten Signalen und mit veränderlichen Signalperioden ein- und ausgeschaltet.

Bspw. werden die Einschaltzeitpunkten und die Einschaltdauern ferner mit einem vorgegebenen Brückenstrom-Sollmittelwert IL_avg_soll ermittelt.

Hierbei ist der Brückenstrom-Sollmittelwert IL_avg_soll ein Mittelwert des Brückenstromes, der Schaltzyklus T1 durch den Brückenzweig also durch die Brückeninduktivität fließen soll. Dabei wird der Brückenstrom-Sollmittelwert IL_avg_soll als Regelgröße vorgegeben bzw. aus Regel- und Messgrößen, insb. aus Eingangs- und Ausgangsspannung des Spannungsreglers U1, U2 ermittelt und vorgegebenen.

Bspw. wird zwischen dem ermittelten Brückenstrom-Istmittelwert IL_avg_mess und dem vorgegebenen Brückenstrom-Sollmittelwert IL_avg_soll eine Stromdifferenz $\Delta I$ berechnet, wobei gilt: $\Delta I = IL\_avg\_soll - IL\_avg\_mess$. Aus der Stromdifferenz $\Delta I$ wird dann ein Tastgradkorrekturwert $\Delta DC$ berechnet. Die Einschaltzeitpunkte und die Einschaltdauern werden dann ferner aus dem berechneten Tastgradkorrekturwert $\Delta DC$ ermittelt.

Bspw. wird der Brückenstrom-Momentanwert Istart1a, Istart1b; Istart2a, Istart2b; Istart3a, Istart3b aus der Brückeninduktivität L und den Umladekapazitäten der Transistorschalter ermittelt.

Mit dem Brückenstrom-Momentanwert Istart1a, Istart1b; Istart2a, Istart2b; Istart3a, Istart3b werden die Ein- und Ausschaltzeitpunkte der Transistorschalter für den nachfolgenden Schaltzyklus T1 ermittelt.

Hierbei ist eine Periodendauer Tper die Summe der Zeitdauer von der jeweiligen Ein- und Ausschaltdauer der jeweiligen einzelnen Transistorschalter.

Bspw. wird die Periodendauer ferner mit dem Brückenstrom-Istmittelwert IL_avg_mess ermittelt.

Bspw. werden in dem jeweiligen aktuellen Schaltzyklus T0 eine Eingangsspannung U1 an der eingangsseitigen Halbbrückenschaltung und eine Ausgangsspannung U2 an der ausgangsseitigen Halbbrückenschaltung gemessen. Die gemessene Eingangs- und Ausgangsspannung U1, U2 werden anschließend miteinander verglichen. Die Einschaltzeitpunkte, die Einschaltdauern und/oder die Periodendauer werden dann bspw. ferner abhängig von dem Vergleichsergebnis zwischen der Eingangsspannung U1 und der Ausgangsspannung U2 ermittelt.

Bspw. wird der Brückenstrom-Momentanwert Istart1a, Istart1b; Istart2a, Istart2b; Istart3a, Istart3b neben der Brückeninduktivität L und den Umladekapazitäten der Transistorschalter bspw. auch aus der Eingangs- und der Ausgangsspannung U1, U2 ermittelt.

Fall 1:

Bei einem Verhältnis zwischen der gemessenen Eingangsspannung U1 und der gemessenen Ausgangsspannung U2, bei dem gilt:
U2 > k1*U1, mit k1 > 1, insb. k1 = 1.2, werden in dem nachfolgenden Schaltzyklus bspw.:

- der positivspannungsseitige Transistorschalter der eingangsseitigen Halbbrückenschaltung durchgehend eingeschaltet (also dauerhaft "high" geschaltet);
- der negativspannungsseitige Transistorschalter der eingangsseitigen Halbbrückenschaltung durchgehend ausgeschaltet (also dauerhaft "low" geschaltet);
- der negativspannungsseitige Transistorschalter der ausgangsseitigen Halbbrückenschaltung vom Anfang des Schaltzyklus T1 für eine erste Einschaltdauer tein S4 eingeschaltet und für die restliche Zeit der Periodendauer Tper des nachfolgenden Schaltzyklus T1 ausgeschaltet; und

- der positivspannungsseitige Transistorschalter der ausgangsseitigen Halbbrückenschaltung vom Anfang des Schaltzyklus T1 für die erste Einschaltdauer tein_S4 ausgeschaltet und für die restliche Zeit der Periodendauer Tper des nachfolgenden Schaltzyklus T1 eingeschaltet.

Dabei gelten für die erste Einschaltdauer tein_S4:

$$\text{tein\_S4} = \frac{2 \cdot L \cdot (\text{Istart1a} - \text{IL\_avg\_soll}) \cdot [\text{U2} \cdot (1 + \Delta DC) - \text{U1}]}{\text{U1} \cdot (\text{U1} - \text{U2})} \text{, bei IL\_avg\_soll >= 0}$$

Ampere (wobei der vorgegebene Brückenstrom-Momentanwert Istart1a kleiner als 0 Ampere ist (bzw. ein anderes Vorzeichen als der vorgegebene Brückenstrom-Sollmittelwert IL_avg_soll hat) und beim Ausschalten des positivspannungsseitigen Transistorschalters der ausgangsseitigen Halbbrückenschaltung erreicht wird), oder

$$\text{tein\_S4} = \frac{2 \cdot L \cdot (\text{Istart1b} - \text{IL\_avg\_soll}) \cdot [\text{U1} - \text{U2} \cdot (1 + \Delta DC)]}{\text{U1} \cdot (\text{U1} - \text{U2})} \text{, bei IL\_avg\_soll < 0}$$

Ampere (wobei der vorgegebene Brückenstrom-Momentanwert Istart1b größer als 0 Ampere ist (bzw. ein anderes Vorzeichen als der vorgegebene Brückenstrom-Sollmittelwert IL_avg_soll hat) und beim Ausschalten des negativspannungsseitigen Transistorschalters der ausgangsseitigen Halbbrückenschaltung erreicht wird).

Die Periodendauer Tper für den jeweiligen nachfolgenden Schaltzyklus T1 wird im Fall 1 bspw. anhand folgender Gleichungen ermittelt:

$$\text{Tper} = \frac{2 \cdot L \cdot \text{U2} \cdot (\text{Istart1a} - \text{IL\_avg\_soll})}{\text{U1} \cdot (\text{U1} - \text{U2})} \text{, bei IL\_avg\_soll >= 0 Ampere,}$$

oder

$$\text{Tper} = \frac{2 \cdot L \cdot \text{U2} \cdot (\text{IL\_avg\_soll} - \text{Istart1b})}{\text{U1} \cdot (\text{U1} - \text{U2})} \text{, bei IL\_avg\_soll < 0 Ampere.}$$

Fall 2:

Bei einem Verhältnis zwischen der gemessenen Eingangsspannung U1 und der gemessenen Ausgangsspannung U2, bei dem gilt:
k2*U1 <= U2 <= k1*U1, mit k1 > 1, insb. k1 = 1.2, und k2 < 1, insb. k2 = 0.8, werden in dem nachfolgenden Schaltzyklus bspw.:

- der positivspannungsseitige Transistorschalter der eingangsseitigen Halbbrückenschaltung und der negativspannungsseitige Transistorschalter der ausgangsseitigen Halbbrückenschaltung vom Anfang des Schaltzyklus T1 für eine zweite Einschaltdauer tein_S4 eingeschaltet und für die restliche Zeit der Periodendauer Tper des nachfolgenden Schaltzyklus T1 ausgeschaltet; und
- der negativspannungsseitige Transistorschalter der eingangsseitigen Halbbrückenschaltung und der positivspannungsseitige Transistorschalter der ausgangsseitigen Halbbrückenschaltung vom Anfang des Schaltzyklus T1 für die zweite Einschaltdauer tein_S4 ausgeschaltet und für die restliche Zeit der Periodendauer Tper des nachfolgenden Schaltzyklus T1 eingeschaltet.

Dabei gelten für die zweite Einschaltdauer tein_S4:

$$\text{tein\_S4} = \frac{2 \cdot L \cdot (\text{IL\_avg\_soll} - \text{Istart2a}) \cdot [\text{U2} + (\text{U1} + \text{U2}) \cdot \Delta DC]}{\text{U1} \cdot \text{U2}} \text{, bei IL\_avg\_soll >= 0}$$

Ampere (wobei der vorgegebene Brückenstrom-Momentanwert Istart2a kleiner als 0 Ampere ist (bzw. ein anderes Vorzeichen als der vorgegebene Brückenstrom-Sollmittelwert IL_avg_soll hat) und beim Ausschalten des negativspannungsseitigen Transistorschalters der eingangsseitigen Halbbrückenschaltung und des positivspannungsseitigen Transistorschalters der ausgangsseitigen Halbbrückenschaltung erreicht wird), oder

$$\text{tein\_S4} = \frac{2 \cdot L \cdot [(U1 + U2) \cdot \Delta DC + U2] \cdot (\text{Istart2b} - \text{IL\_avg\_soll})}{U1 \cdot U2} \quad \texttt{, bei IL\_avg\_soll < 0}$$

Ampere (wobei der vorgegebene Brückenstrom-Momentanwert Istart2b größer als 0 Ampere ist (bzw. ein anderes Vorzeichen als der vorgegebene Brückenstrom-Sollmittelwert IL_avg_soll hat) und beim Ausschalten des positivspannungsseitigen Transistorschalters der eingangsseitigen Halbbrückenschaltung und des negativspannungsseitigen Transistorschalters der ausgangsseitigen Halbbrückenschaltung erreicht wird).

Die Periodendauer Tper für den jeweiligen nachfolgenden Schaltzyklus T1 wird im Fall 2 bspw. anhand folgender Gleichungen ermittelt:

$$\text{Tper} = \frac{2 \cdot L \cdot (\text{IL\_avg\_soll} - \text{Istart2a}) \cdot (U1 + U2)}{U1 \cdot U2} \quad \texttt{, bei IL\_avg\_soll >= 0 Ampere,}$$

oder

$$\text{Tper} = \frac{2 \cdot L \cdot (\text{Istart2b} - \text{IL\_avg\_soll}) \cdot (U1 + U2)}{U1 \cdot U2} \quad \texttt{, bei IL\_avg\_soll < 0 Ampere.}$$

Fall 3:

Bei einem Verhältnis zwischen der gemessenen Eingangsspannung U1 und der gemessenen Ausgangsspannung U2, bei dem gilt:
U2 < k2*U1, mit k2 < 1, insb. k2 = 0.8, werden in dem nachfolgenden Schaltzyklus bspw.:

- der positivspannungsseitige Transistorschalter der ausgangsseitigen Halbbrückenschaltung durchgehend eingeschaltet (also dauerhaft "high" geschaltet);
- der negativspannungsseitige Transistorschalter der ausgangsseitigen Halbbrückenschaltung durchgehend ausgeschaltet (also dauerhaft "low" geschaltet);
- der positivspannungsseitige Transistorschalter der eingangsseitigen Halbbrückenschaltung vom Anfang des Schaltzyklus T1 für eine dritte Einschaltdauer tein_S1 eingeschaltet und für die restliche Zeit der Periodendauer Tper des nachfolgenden Schaltzyklus T1 ausgeschaltet; und
- der negativspannungsseitige Transistorschalter der eingangsseitigen Halbbrückenschaltung vom Anfang des Schaltzyklus T1 für die dritte Einschaltdauer tein_S1 ausgeschaltet und für die restliche Zeit der Periodendauer Tper des nachfolgenden Schaltzyklus T1 eingeschaltet.

Dabei gelten für die dritte Einschaltdauer tein_S1:

$$\text{tein\_S1} = \frac{2 \cdot L \cdot (\text{IL\_avg\_soll} - \text{Istart3a}) \cdot (U1 \cdot \Delta DC + U2)}{U2 \cdot (U1 - U2)} \quad \texttt{, bei IL\_avg\_soll >= 0 Ampere}$$

(wobei der vorgegebene Brückenstrom-Momentanwert Istart3a kleiner als 0 Ampere ist (bzw. ein anderes Vorzeichen als der vorgegebene Brückenstrom-Sollmittelwert IL_avg_soll hat) und beim Ausschalten des negativspannungsseitigen Transistorschalters der eingangsseitigen Halbbrückenschaltung erreicht wird), oder

$$\text{tein\_S1} = \frac{2 \cdot L \cdot (\text{Istart3b} - \text{IL\_avg\_soll}) \cdot (U1 \cdot \Delta DC + U2)}{U2 \cdot (U1 - U2)} \quad \texttt{, bei IL\_avg\_soll < 0 Ampere}$$

(wobei der vorgegebene Brückenstrom-Momentanwert Istart3b größer als 0 Ampere ist (bzw. ein anderes Vorzeichen als der vorgegebene Brückenstrom-Sollmittelwert IL_avg_soll hat) und beim Ausschalten des positivspannungsseitigen Transistorschalters der eingangsseitigen Halbbrückenschaltung erreicht wird).

Die Periodendauer Tper für den jeweiligen nachfolgenden Schaltzyklus T1 wird im Fall 3 bspw. anhand folgender Gleichungen ermittelt:

$$Tper = \frac{2 \cdot L \cdot U1 \cdot (Istart3a - IL\_avg\_soll)}{U2 \cdot (U2 - U1)} \text{, bei IL\_avg\_soll} >= 0 \text{ Ampere,}$$

oder

$$Tper = \frac{2 \cdot L \cdot U1 \cdot (IL\_avg\_soll - Istart3b)}{U2 \cdot (U2 - U1)} \text{, bei IL\_avg\_soll} < 0 \text{ Ampere.}$$

Gemäß einem weiteren Aspekt der Erfindung wird ein Spannungswandler, insb. ein Gleichspannungswandler, zur bidirektionalen Spannungswandlung bereitgestellt.

Der Spannungswandler umfasst eine eingangsseitige Halbbrückenschaltung mit jeweils einem positivspannungsseitigen und einem negativspannungsseitigen zueinander in Reihe geschalteten Transistorschalter.

Der Spannungswandler umfasst ferner eine ausgangsseitige Halbbrückenschaltung mit jeweils einem weiteren positivspannungsseitigen und einem weiteren negativspannungsseitigen zueinander in Reihe geschalteten Transistorschalter.

Der Spannungswandler umfasst außerdem einen Brückenzweig zwischen Mittelabgriffen der beiden Halbbrückenschaltungen mit einer Brückeninduktivität L, bzw. in Form von einer Spule.

Der Spannungswandler umfasst zudem eine Messanordnung, die eingerichtet ist, für einen jeweiligen nachfolgenden Schaltzyklus der vier Transistorschalter (der beiden Halbbrückenschaltungen) in einem jeweiligen aktuellen Schaltzyklus einen durch den Brückenzweig fließenden Brückenstrom über den gesamten zu aktuellen Schaltzyklus messen.

Der Spannungswandler umfasst ferner eine Ermittlungsanordnung, die eingerichtet ist, aus dem gemessenen Brückenstrom einen Brückenstrom-Istmittelwert IL_avg_mess zu ermitteln und aus dem Brückenstrom-Istmittelwert IL_avg_mess Einschaltzeitpunkte und Einschaltdauern der jeweiligen Transistorschalter für den jeweiligen nachfolgenden Schaltzyklus T1 zu ermitteln.

Der Spannungswandler umfasst zudem eine Steueranordnung, die eingerichtet ist, in dem jeweiligen nachfolgenden Schaltzyklus T1 die jeweiligen Transistorschalter zu den jeweiligen ermittelten Einschaltzeitpunkten und für die jeweiligen ermittelten Einschaltdauern einzuschalten.

Dabei ist die Ermittlungsanordnung ferner eingerichtet, in dem jeweiligen aktuellen Schaltzyklus T0 einen Brückenstrom-Momentanwert Istart1a, Istart1b; Istart2a, Istart2b; Istart3a, Istart3b des Brückenstromes zu ermitteln, der zum Zeitpunkt durch den Brückenzweig fließen soll, zu dem einer der Transistorschalter von einem eingeschalteten Zustand in einen ausgeschalteten Zustand umgeschaltet wird. Außerdem ist die Ermittlungsanordnung ferner eingerichtet, die Einschaltzeitpunkte und die Einschaltdauern ferner mit dem ermittelten Brückenstrom-Momentanwert Istart1a, Istart1b; Istart2a, Istart2b; Istart3a, Istart3b zu ermitteln. Dabei hat der Brückenstrom-Momentanwert insb. stets ein anderes Vorzeichen als der Brückenstrom-Sollmittelwert.

Vorteilhafte Ausgestaltungen des oben beschriebenen Verfahrens sind, soweit möglich, auf den oben genannten Spannungswandler übertragbar, auch als vorteilhafte Ausgestaltungen des Spannungswandlers anzusehen.

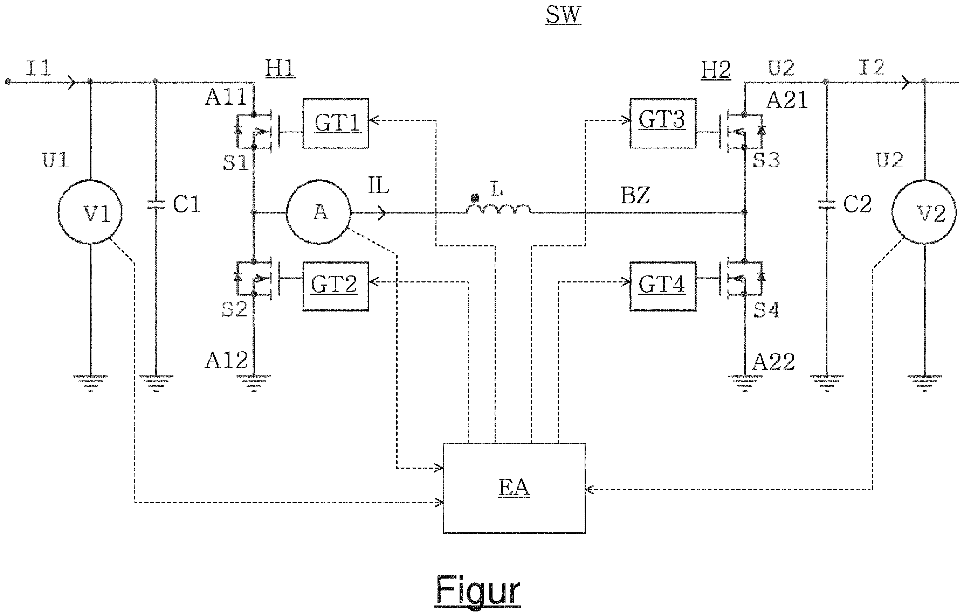

Beschreibung der Zeichnung:

Im Folgenden wird eine beispielhafte Ausführungsform der Erfindung bezugnehmend auf die beiliegende Zeichnung näher erläutert. Dabei zeigt eine einzige Figur in einer schematischen Darstellung einen bidirektionalen H-Brücken-Spannungswandler SW gemäß der beispielhaften Ausführungsform der Erfindung.

Der Spannungswandler SW ist stromeingangsseitig über zwei Stromeingangsanschlüsse A11, A12 an einer Eingangsspannung U1, und stromausgangsseitig über zwei Stromausgangsanschlüsse A21, A22 an einer Ausgangsspannung U2 elektrisch angeschlossen. Der Spannungswandler SW dient zur bidirektionalen Spannungsumwandlung zwischen der Eingangs- und der Ausgangsspannung U1, U2.

Der Spannungswandler SW umfasst eine eingangsseitige Halbbrückenschaltung H1 mit jeweils einem positivspannungsseitigen und einem negativspannungsseitigen Transistorschalter S1, S2, die zueinander in Reihe und zwischen den beiden Stromeingangsanschlüssen A11, A12 elektrisch angeschlossen sind.

Der Spannungswandler SW umfasst ferner eine ausgangsseitige Halbbrückenschaltung H2 mit jeweils einem positivspannungsseitigen und einem negativspannungsseitigen Transistorschalter S3, S4, die zueinander in Reihe und zwischen den beiden Stromausgangsanschlüssen A21, A22 elektrisch angeschlossen sind.

Der Spannungswandler SW umfasst ferner einen Brückenzweig BZ, der die beiden Halbbrückenschaltungen H1, H2 bzw. deren Mittelabgriffe miteinander elektrisch verbindet. In dem Brückenzweig BZ ist eine Brückeninduktivität L in Form von einer Spule elektrisch angeschlossen.

Der Spannungswandler SW umfasst ferner zwei Kondensatoren C1 und C2, die jeweils zwischen den beiden Stromeingangsanschlüssen A11, A12 und somit parallel zur eingangsseitigen Halbbrückenschaltung H1 bzw. zwischen den beiden Stromausgangsanschlüssen A21, A22 und somit parallel zur ausgangsseitigen Halbbrückenschaltung H2 elektrisch angeschlossen sind. Die Kondensatoren C1 und C2 dienen zur Glättung der Eingangs- bzw. Ausgangsspannung U1, U2.

Der Spannungswandler SW umfasst ferner eine Messanordnung, die einen Strommesser A und zwei Spannungsmesser V1, V2 umfasst.

Der Strommesser A ist in dem Brückenzweig BZ in Serie zur Spule angeschlossen und dient zum Messen eines durch den Brückenzweig BZ fließenden Brückenstromes IL.

Die beiden Spannungsmesser V1, V2 sind jeweils zwischen den beiden Stromeingangsanschlüssen A11, A12 bzw. zwischen den beiden Stromausgangsanschlüssen A21, A22 angeschlossen und dienen jeweils zum Messen der Eingangs- bzw. Ausgangspannung U1, U2.

Der Spannungswandler SW umfasst ferner eine Ermittlungsanordnung EA, die signaleingangsseitig mit Signalausgängen der Strom-/Spannungsmesser A, V1, V2 signaltechnisch verbunden ist. Über die Signalverbindungen erhält die Ermittlungsanordnung EA von den Strom-/Spannungsmessern A, V1, V2 die Messwerte des Brückenstromes IL und der beiden Spannungen U1, U2. Die Ermittlungsanordnung EA ist ferner eingerichtet, anhand von gemessenen Strom- und Spannungswerten Periodendauern, Einschaltzeitpunkte und Einschaltdauern der jeweiligen Transistorschalter S1, S2, S3, S4 für jeweilige nachfolgende Schaltzyklen zu ermitteln.

Der Spannungswandler SW umfasst ferner eine Steueranordnung zum Steuern der vier Transistorschalter S1, S2, S3, S4. Die Steueranordnung umfasst vier Gatetreiber GT1, GT2, GT3, GT4 zum Ansteuern von jeweils einem der vier Transistorschalter S1, S2, S3, S4.

Die Gatetreiber GT1, GT2, GT3, GT4 sind signaleingangsseitig mit jeweils einem von vier Signalausgängen der Ermittlungsanordnung EA signaltechnisch verbunden und steuersignalausgangsseitig jeweils mit dem Steueranschluss der jeweiligen Transistorschalter S1, S2, S3, S4 verbunden. Die Gatetreiber GT1, GT2, GT3, GT4 sind eingerichtet, die jeweiligen Transistorschalter S1, S2, S3, S4 in den jeweiligen Schaltzyklen basierend auf den von der Ermittlungsanordnung EA ermittelten Periodendauern, Einschaltzeitpunkten und Einschaltdauern gesteuert ein-/auszuschalten.

Nach dem die Schaltungstopologie des Spannungswandlers SW anhand der Figur beschrieben wurde, wird nachfolgend ein Verfahren zum Ansteuern des Spannungswandlers SW bzw. der vier Transistorschalter S1, S2, S3, S4 näher beschrieben:

Zunächst messen die beiden Spannungsmesser V1, V2 und der Strommesser A in jeweiligem aktuellen Schaltzyklus T0 die Eingangs- und die Ausgangsspannung U1, U2, sowie den durch den Brückenzweig fließenden Brückenstrom IL. Dabei misst der Strommesser A den Brückenstrom IL über die gesamte Dauer des aktuellen Schaltzyklus T0.

Aus den Brückenstrommesswerten ermittelt die Ermittlungsanordnung EA einen Brückenstrom-Istmittelwert IL_avg_mess. Ferner ermittelt die Ermittlungsanordnung EA aus der gemessenen Eingangs- und Ausgangsspannung U1, U2 sowie weiteren Regelgrößen einen Brückenstrom-Sollmittelwert IL_avg_soll und gibt diesen als Regelgröße vor.

Aus dem Brückenstrom-Istmittelwert IL_avg_mess und dem vorgegebenen Brückenstrom-Sollmittelwert IL_avg_soll berechnet die Ermittlungsanordnung EA eine Stromdifferenz $\Delta I$, anhand der Gleichung: $\Delta I = IL\_avg\_mess - IL\_avg\_soll$. Aus der Stromdifferenz $\Delta I$ berechnet. die Ermittlungsanordnung EA dann ein Tastgradkorrekturwert $\Delta DC$.

Ferner ermittelt die Ermittlungsanordnung EA aus der Brückeninduktivität L und den vorbekannten Umladekapazitäten der Transistorschalter S1, S2, S3, S4, sowie der Eingangs- und Ausgangsspannung U1, U2 einen Brückenstrom-Momentanwert Istart1a, Istart1b, Istart2a, Istart2b, Istart3a oder Istart3b, der zum Zeitpunkt durch den Brückenzweig BZ fließen soll, zu dem einer der Transistorschalter S1, S2, S3, S4 von einem eingeschalteten Zustand in einen ausgeschalteten Zustand umgeschaltet wird.

Ferner vergleicht die Ermittlungsanordnung EA die Eingangs- und die Ausgangsspannung U1, U2 miteinander. Abhängig von dem Vergleichsergebnis der beiden Spannungen U1, U2 ermittelt die Ermittlungsanordnung EA die Periodendauern, Einschaltzeitpunkte und die Einschaltdauern aller vier Transistorschalter S1, S2, S3, S4 für den nachfolgenden Schaltzyklus T1 wie nachfolgend beschrieben.

Die Steueranordnung bzw. die Gatetreiber GT1, GT2, GT3 und GT4 steuern die jeweiligen Transistorschalter S1, S2, S3, S4 basierend auf den ermittelten Periodendauern, Einschaltzeitpunkten und den Einschaltdauern in dem jeweiligen nachfolgenden Schaltzyklus.

Fall 1: die Ausgangsspannung U2 ist größer als die Eingangsspannung U1, wobei gilt: $U2 > k1*U1$, mit $k1 > 1$, insb. $k1 = 1.2$.

In diesem Fall werden die Transistorschalter S1, S2, S3, S4 in dem nachfolgenden Schaltzyklus T1 wie folgt betrieben:

- Der positivspannungsseitige Transistorschalter S1 der eingangsseitigen Halbbrückenschaltung H1 wird durchgehend eingeschaltet (dauerhaft 'high' geschaltet).

- Der negativspannungsseitige Transistorschalter S2 der eingangsseitigen Halbbrückenschaltung H1 wird durchgehend ausgeschaltet (dauerhaft 'low' geschaltet).

- Der negativspannungsseitige Transistorschalter S4 der ausgangsseitigen Halbbrückenschaltung H2 wird vom Anfang des Schaltzyklus T1 für eine erste Einschaltdauer tein_S4 eingeschaltet und für die restliche Zeit der Periodendauer Tper des nachfolgenden Schaltzyklus T1 ausgeschaltet wird.

- Der positivspannungsseitige Transistorschalter S3 der ausgangsseitigen Halbbrückenschaltung H2 wird vom Anfang des Schaltzyklus T1 für die erste Einschaltdauer tein_S4 ausgeschaltet und für die restliche Zeit der Periodendauer Tper des nachfolgenden Schaltzyklus T1 eingeschaltet.

Dabei wird die erste Einschaltdauer tein_S4 anhand folgender Gleichungen ermittelt:

$$\text{tein\_S4} = \frac{2 \cdot L \cdot (\text{Istart1a} - \text{IL\_avg\_soll}) \cdot [U2 \cdot (1 + \Delta DC) - U1]}{U1 \cdot (U1 - U2)} \text{, bei IL\_avg\_soll} >= 0$$

Ampere (also der Brückenstrom IL soll von der eingangsseitigen Halbbrückenschaltung H1 in die ausgangsseitige Halbbrückenschaltung H2 fließen), oder

$$\text{tein\_S4} = \frac{2 \cdot L \cdot (\text{Istart1b} - \text{IL\_avg\_soll}) \cdot [U1 - U2 \cdot (1 + \Delta DC)]}{U1 \cdot (U1 - U2)} \text{, bei IL\_avg\_soll} < 0$$

Ampere (also der Brückenstrom IL soll von der ausgangsseitigen Halbbrückenschaltung H2 in die eingangsseitige Halbbrückenschaltung H1 fließen).
Die Periodendauer Tper wird anhand folgender Gleichungen ermittelt:

$$\text{Tper} = \frac{2 \cdot L \cdot U2 \cdot (\text{Istart1a} - \text{IL\_avg\_soll})}{U1 \cdot (U1 - U2)} \text{, bei IL\_avg\_soll} >= 0 \text{ Ampere,}$$

oder

$$\text{Tper} = \frac{2 \cdot L \cdot U2 \cdot (\text{IL\_avg\_soll} - \text{Istart1b})}{U1 \cdot (U1 - U2)} \text{, bei IL\_avg\_soll} < 0 \text{ Ampere.}$$

Fall 2: die Ausgangsspannung U2 ist ungefähr gleich groß wie die Eingangsspannung U1, wobei gilt: k2*U1 <= U2 <= k1*U1, mit k1 > 1, insb. k1 = 1.2, und k2 < 1, insb. k2 = 0.8.
In diesem Fall werden die Transistorschalter S1, S2, S3, S4 in dem nachfolgenden Schaltzyklus T1 wie folgt betrieben:

- Der positivspannungsseitige Transistorschalter S1 der eingangsseitigen Halbbrückenschaltung H1 und der negativspannungsseitige Transistorschalter S4 der ausgangsseitigen Halbbrückenschaltung H2 werden vom Anfang des Schaltzyklus T1 für eine zweite Einschaltdauer tein_S4 eingeschaltet und für die restliche Zeit der Periodendauer Tper des nachfolgenden Schaltzyklus T1 ausgeschaltet.

- Der negativspannungsseitige Transistorschalter S2 der eingangsseitigen Halbbrückenschaltung H1 und der positivspannungsseitige Transistorschalter S3 der ausgangsseitigen Halbbrückenschaltung H2 werden vom Anfang des Schaltzyklus T1 für die zweite Einschaltdauer tein_S4 ausgeschaltet und für die restliche Zeit der Periodendauer Tper des nachfolgenden Schaltzyklus T1 eingeschaltet.

Dabei wird die zweite Einschaltdauer tein_S4 anhand folgender Gleichungen ermittelt:

$$\text{tein\_S4} = \frac{2 \cdot L \cdot (IL\_avg\_soll - Istart2a) \cdot [U2 + (U1 + U2) \cdot \Delta DC]}{U1 \cdot U2} \quad \text{, bei IL\_avg\_soll} >= 0$$

Ampere (also der Brückenstrom IL soll von der eingangsseitigen Halbbrückenschaltung H1 in die ausgangsseitige Halbbrückenschaltung H2 fließen), oder

$$\text{tein\_S4} = \frac{2 \cdot L \cdot [(U1 + U2) \cdot \Delta DC + U2] \cdot (Istart2b - IL\_avg\_soll)}{U1 \cdot U2} \quad \text{, bei IL\_avg\_soll} < 0$$

Ampere (also der Brückenstrom IL soll von der ausgangsseitigen Halbbrückenschaltung H2 in die eingangsseitige Halbbrückenschaltung H1 fließen).

Die Periodendauer Tper wird anhand folgender Gleichungen ermittelt:

$$\text{Tper} = \frac{2 \cdot L \cdot (IL\_avg\_soll - Istart2a) \cdot (U1 + U2)}{U1 \cdot U2} \quad \text{, bei IL\_avg\_soll} >= 0 \text{ Ampere,}$$

oder

$$\text{Tper} = \frac{2 \cdot L \cdot (Istart2b - IL\_avg\_soll) \cdot (U1 + U2)}{U1 \cdot U2} \quad \text{, bei IL\_avg\_soll} < 0 \text{ Ampere.}$$

Fall 3: die Ausgangsspannung U2 ist kleiner als die Eingangsspannung U1, wobei gilt: U2 < k2*U1, mit k2 < 1, insb. k2 = 0.8.

In diesem Fall werden die Transistorschalter S1, S2, S3, S4 in dem nachfolgenden Schaltzyklus T1 wie folgt betrieben:

- Der positivspannungsseitige Transistorschalter S3 der ausgangsseitigen Halbbrückenschaltung H2 wird durchgehend eingeschaltet (dauerhaft 'high' geschaltet).

- Der negativspannungsseitige Transistorschalter S4 der ausgangsseitigen Halbbrückenschaltung H2 wird durchgehend ausgeschaltet (dauerhaft 'low' geschaltet).

- Der positivspannungsseitige Transistorschalter S1 der eingangsseitigen Halbbrückenschaltung H1 wird vom Anfang des Schaltzyklus T1 für eine dritte Einschaltdauer tein_S1 eingeschaltet und für die restliche Zeit der Periodendauer Tper des nachfolgenden Schaltzyklus T1 ausgeschaltet.

- Der negativspannungsseitige Transistorschalter S2 der eingangsseitigen Halbbrückenschaltung H1 wird vom Anfang des Schaltzyklus T1 für die dritte Einschaltdauer tein_S1 ausgeschaltet und für die restliche Zeit der Periodendauer Tper des nachfolgenden Schaltzyklus T1 eingeschaltet.

Dabei wird die dritte Einschaltdauer tein_S1 anhand folgender Gleichungen ermittelt:

$$\text{tein\_S1} = \frac{2 \cdot L \cdot (IL\_avg\_soll - Istart3a) \cdot (U1 \cdot \Delta DC + U2)}{U2 \cdot (U1 - U2)} \quad \text{, bei IL\_avg\_soll} >= 0 \text{ Ampere}$$

(also der Brückenstrom IL soll von der eingangsseitigen Halbbrückenschaltung H1 in die ausgangsseitige Halbbrückenschaltung H2 fließen), oder

$$\text{tein\_S1} = \frac{2 \cdot L \cdot (Istart3b - IL\_avg\_soll) \cdot (U1 \cdot \Delta DC + U2)}{U2 \cdot (U1 - U2)} \quad \text{, bei IL\_avg\_soll} < 0 \text{ Ampere}$$

(also der Brückenstrom IL soll von der ausgangsseitigen Halbbrückenschaltung H2 in die eingangsseitige Halbbrückenschaltung H1 fließen).

Die Periodendauer Tper wird anhand folgender Gleichungen ermittelt:

$$\text{Tper} = \frac{2 \cdot L \cdot U1 \cdot (\text{Istart3a} - \text{IL\_avg\_soll})}{U2 \cdot (U2 - U1)} \quad , \text{ bei IL\_avg\_soll} >= 0 \text{ Ampere,}$$

oder

$$\text{Tper} = \frac{2 \cdot L \cdot U1 \cdot (\text{IL\_avg\_soll} - \text{Istart3b})}{U2 \cdot (U2 - U1)} \quad , \text{ bei IL\_avg\_soll} < 0 \text{ Ampere.}$$

Die zuvor beschriebenen drei Fälle decken also die drei Bereiche ab, in denen alle mögliche Verhältnisse der Eingangs- und Ausgangsspannung U1, U2 gelten: U2 < U1, U2 ≈ U1 oder U2 > U1. Die Verhältnisse IL_avg_soll >= 0 Ampere oder IL_avg_soll < 0 Ampere zeigen die Soll-Stromrichtung des Brückenstromes IL.

Die beiden Faktoren k1 und k2 müssen so gewählt werden, dass bei der gegebenen Spannungsmessungenauigkeit bei der Eingangs- und Ausgangsspannung U1 und U2 weiterhin sichergestellt ist, dass bei U1 = U2 die Gleichung beim Fall 2 zur Anwendung kommt.

Das oben beschriebene Verfahren hat den Vorteil, dass der Spannungswandler SW in allen Fällen (bidirektional) und verlustleistungsarm umwandeln kann, in denen eins der folgenden Verhältnisse gilt:

- U1 > U2, bei IL_avg_soll >= 0 oder IL_avg_soll < 0 (Fall 1) ;
- U1 = U2, bei IL_avg_soll >= 0 oder IL_avg_soll < 0 (Fall 2) ;
- U1 < U2, bei IL_avg_soll >= 0 oder IL_avg_soll < 0 (Fall 3) ;

Das Verfahren stellt sicher, dass der Spannungswandler SW unabhängig vom Arbeitspunkt, also unabhängig von den Spannungsverhältnissen , der Stromrichtung und Stromhöhe im ZVS-Mode (auf Englisch "Zero Voltage Switching Mode") betrieben werden kann, wobei die Schaltverluste der Transistorschalter S1, S2, S3 und S4 in allen Arbeitspunkten des Spannungswandlers SW weitgehend eliminiert werden und die gesamte Verlustleistung auf Minimum reduziert wird.

Da die Strom-/Spannungsmesser A, V1, V2, die Gatetreiber GT1, GT2, GT3, GT4, die Teil des Verfahrens durchführen, an sich als die Komponenten zur Regelung des Spannungswandlers SW bereits vorhanden sind, bedarf es lediglich der Ermittlungsanordnung EA zusätzlich zum Durchführen des Verfahrens. Da die Ermittlungsanordnung EA auch in einem bereits vorhandenen Regler des Spannungswandlers SW funktionell implementiert werden kann, kann der Spannungswandler SW ohne zusätzlichen Schaltungskomponenten und somit ohne zusätzlichen Bauraum realisiert werden.

Da die gesamte Verlustleistung reduziert wird, bedarf es wenigem Kühlungsaufwand und somit eine entsprechend klein dimensionierte Kühlanordnung für den Spannungswandler SW.

Das beschriebe Verfahren findet Anwendungen insb. in Kraftfahrzeugen, speziell Hybridelektro-/Elektrofahrzeugen, bei denen elektrische Leistung mittels eines oder mehreren kostengünstigen H-Brücken-Spannungswandlern SW verlustarmt übertragen werden soll.

Beispiele für derartige Anwendungen sind:

- Aufwärtswandler (auf Englisch "Boost-Converter") zur Anpassung einer Akkumulator-Spannung an eine Wechselrichter-Spannung (DC-DC-Anwendung, also Umwandlung einer Ausgangsspannung von einer Gleichspannungsquelle in eine Ladespannung für eine Gleichspannungs-Senke);

- Abwärts-Aufwärtswandler (auf Englisch "Buck-Boost-Converter") zur Anpassung einer Akkumulator-Spannung an eine Spannung einer DC-Ladestation (DC-DC-Anwendung, also Umwandlung einer Ausgangsspannung von einer Gleichspannungsladestation in eine Ladespannung für einen Akkumulator;

- Abwärts-Aufwärtswandler zur Anpassung einer AC-Ladestations-Wechselspannung an eine Akkumulator-Spannung (Gleichrichtung, AC-DC-Anwendung);

- Abwärts-Aufwärtswandler zur Anpassung einer Akkumulator-Spannung an eine Nennspannung eines AC-Betriebsmittels (z.B. E-Maschine, DC-AC-Anwendung).

Die Reduzierung der Schaltverlustleistung wird insb. erreicht, in dem in Abhängigkeit des Arbeitspunktes (Eingangsspannung U1, Ausgangsspannung U2, Ist-Brückenstrom und Soll-Brückenstrom) die Transistorschalter S1, S2, S3, S4 der Halbbrückenschaltung H1, H2 für den jeweils folgenden Schaltzyklus T1 eine berechnete Einschaltdauer eingeschaltet werden und eine berechnete Ausschaltdauer ausgeschaltet werden. Die Berechnung erfolgt dabei jeweils derart, dass bei Ausschalten eines der Transistorschalter S1, S2, S3, S4 ein vorher definierter Brückenstrom durch die Brückeninduktivität fließt, der eine natürliche Kommutierung auf den potentialmäßig gegenüberliegenden Transistorschalter S1, S2, S3, S4 sicherstellt. Das Einschalten eines Transistors Transistorschalter S1, S2, S3, S4 erfolgt dabei immer nach erfolgter natürlicher Kommutierung, wenn die Spannung ca. 0 Volt an diesem Transistor Transistorschalter S1, S2, S3, S4 anliegt (auf Englisch "Zero Voltage Switching"). Insb. werden die Schalthandlungen derart ausgeführt, dass jeweils bei Ausschalten eines der Transistorschalter S1, S2, S3, S4 der Brückenstrom an der Brückeninduktivität L eine Flussrichtung und eine Mindestamplitude aufweist, sodass die Spannung durch eben diesen Brückenstrom und nicht durch das Einschalten des komplementären Transistors (der Transistor S3 ist dabei komplementär zum Transistor S4, der Transistor S4 ist komplementär zum Transistor S3, der Transistor S1 ist komplementär zum Transistor S2, der Transistor S2 ist komplementär zum Transistor S1) kommutiert. Abweichungen zwischen dem berechneten Modell und dem realen Verhalten werden mittels eines PI-Stromreglers korrigiert.

Das beschriebene Verfahren hat den entscheidenden Vorteil, dass der ZVS-Betrieb ("Zero Voltage Switching"-Betrieb)sowohl in allen stationären Arbeitspunkten als auch bei Änderungen von Arbeitspunkten aufrechterhalten werden kann, und zwar für alle Betriebszustände unter den drei möglichen Verhältnissen zwischen der Eingangs- und Ausgangsspannung: U1 < U2, U1 = U2, U1 > U2.

Wie bereits erwähnt, werden die Eingangs- und Ausgangsspannung U1, U2 gemessen. Der Brückenstrom-Sollmittelwert IL_avg_soll und der Brückenstrom-Momentanwert Istart1a, Istart1b; Istart2a, Istart2b; Istart3a, Istart3b werden vorgegeben. Aus diesen Werten werden die Periodendauer, der Einschaltzeitpunkt und die Einschaltdauer und somit der Tastverhältnis bestimmt. Die Unsicherheit bezüglich einer Parallelverschiebung des sich ergebenden Brückenstromverlaufs über die Schaltperiode des sich aus der Periodendauer, dem Einschaltzeitpunkt und der Einschaltdauer ergebenden Stromdreiecks um ein beliebiges Offset kann mit dem oben beschriebenen Verfahren mit dem Brückenstrom-Sollmittelwert IL_avg_soll und dem Brückenstrom-Momentanwert Istart1a, Istart1b; Istart2a, Istart2b; Istart3a, Istart3b beseitigt werden.

## Patentansprüche

1. Verfahren zum Betrieb eines bidirektionalen Spannungswandlers (SW), der eine eingangsseitige Halbbrückenschaltung (H1) mit jeweils einem positivspannungsseitigen (S1) und einem negativspannungsseitigen (S2) zueinander in Reihe geschalteten Transistorschalter, eine ausgangsseitige Halbbrückenschaltung (H2) mit jeweils einem positivspannungsseitigen (S3) und einem negativspannungsseitigen (S4) zueinander in Reihe geschalteten Transistorschalter sowie einen Brückenzweig (BZ) mit einer Brückeninduktivität (L) umfasst;

    - wobei eine Eingangsspannung (U1) an der eingangsseitigen Halbbrückenschaltung (H1) und eine Ausgangsspannung (U2) an der ausgangsseitigen Halbbrückenschaltung (H2) gemessen werden;
    - wobei für einen jeweiligen nachfolgenden Schaltzyklus T1 der Transistorschalter (S1, S2, S3, S4) in einem jeweiligen aktuellen Schaltzyklus T0 ein Brückenstrom-Istmittelwert IL_avg_mess eines durch den Brückenzweig (BZ) fließenden Brückenstromes (IL) ermittelt wird;
    - wobei mit dem ermittelten Brückenstrom-Istmittelwert IL_avg_mess Einschaltzeitpunkte und Einschaltdauern der jeweiligen Transistorschalter (S1, S2, S3, S4) für den jeweiligen nachfolgenden Schaltzyklus T1 ermittelt werden;
    - wobei die jeweiligen Transistorschalter (S1, S2, S3, S4) in dem jeweiligen nachfolgenden Schaltzyklus T1 zu den jeweiligen ermittelten Einschaltzeitpunkten und für die jeweiligen ermittelten Einschaltdauern eingeschaltet werden,
    **dadurch gekennzeichnet, dass**
    - in dem jeweiligen aktuellen Schaltzyklus T0 ferner ein Brückenstrom-Momentanwert Istart1a, Istart1b; Istart2a, Istart2b; Istart3a, Istart3b des Brückenstromes (IL) ermittelt wird, der zum Zeitpunkt durch den Brückenzweig (BZ) fließen soll, zu dem einer der Transistorschalter (S1, S2, S3, S4) von einem eingeschalteten Zustand in einen ausgeschalteten Zustand umgeschaltet wird; und
    - in Abhängigkeit der Eingangsspannung (U1) und der Ausgangsspannung (U2) die Einschaltzeitpunkten und die Einschaltdauern ferner mit dem ermittelten Brückenstrom-Momentanwert Istart1a, Istart1b; Istart2a, Istart2b; Istart3a, Istart3b ermittelt werden.

2. Verfahren nach Anspruch 1, die Einschaltzeitpunkten und die Einschaltdauern ferner mit einem vorgegebenen Brückenstrom-Sollmittelwert IL_avg_soll ermittelt werden.

3. Verfahren nach Anspruch 2, wobei zwischen dem ermittelten Brückenstrom-Istmittelwert IL_avg_mess und dem vorgegebenen Brückenstrom-Sollmittelwert IL_avg_soll eine Stromdifferenz ΔI berechnet wird, und ein Tastgradkorrekturwert ΔDC mit der Stromdifferenz ΔI berechnet wird, und die Einschaltzeitpunkten und die Einschaltdauern ferner mit dem berechneten Tastgradkorrekturwert ΔDC ermittelt werden.

4. Verfahren nach einem der vorangehenden Ansprüche, wobei der Brückenstrom-Momentanwert Istart1a, Istart1b; Istart2a, Istart2b; Istart3a, Istart3b aus der Brückeninduktivität (L) und den Umladekapazitäten der Transistorschalter (S1, S2, S3, S4) ermittelt wird.

5. Verfahren nach Anspruch 4, wobei mit dem Brückenstrom-Momentanwert Istart1a, Istart1b; Istart2a, Istart2b; Istart3a, Istart3b eine Periodendauer im jeweiligen nachfolgenden Schaltzyklus T1 ermittelt wird, und die Transistorschalter (S1, S2, S3, S4) in dem jeweiligen nachfolgenden Schaltzyklus T1 für die ermittelte Periodendauer ein- bzw. ausgeschaltet werden.

6. Verfahren nach Ansprüchen 2 und 5, wobei die Periodendauer ferner mit dem Brückenstrom-Istmittelwert IL_avg_mess ermittelt wird.

7. Verfahren nach einem der vorangehenden Ansprüche, wobei,

- in dem jeweiligen aktuellen Schaltzyklus T0 die Eingangsspannung (U1) an der eingangsseitigen Halbbrückenschaltung (H1) und die Ausgangsspannung (U2) an der ausgangsseitigen Halbbrückenschaltung (H2) gemessen werden;
- die Eingangsspannung (U1) und die Ausgangsspannung (U2) miteinander verglichen werden; und
- abhängig von dem Vergleichsergebnis zwischen der Eingangsspannung (U1) und der Ausgangsspannung (U2) die Einschaltzeitpunkte, die Einschaltdauern und/oder die Periodendauer ermittelt werden.

8. Verfahren nach Ansprüchen 1, 2 und 7, wobei bei einem Verhältnis zwischen der gemessenen Eingangsspannung (U1) und der gemessenen Ausgangsspannung (U2):
U2 > k1*U1, wobei gilt k1 > 1, insb. k1 = 1.2, in dem nachfolgenden Schaltzyklus T1,

- der positivspannungsseitige Transistorschalter (S1) der eingangsseitigen Halbbrückenschaltung (H1) durchgehend eingeschaltet (dauerhaft 'high' geschaltet) wird;
- der negativspannungsseitige Transistorschalter (S2) der eingangsseitigen Halbbrückenschaltung (H1) durchgehend ausgeschaltet (dauerhaft 'low' geschaltet) wird;
- der negativspannungsseitige Transistorschalter (S4) der ausgangsseitigen Halbbrückenschaltung (H2) vom Anfang des Schaltzyklus T1 für eine erste Einschaltdauer tein_S4 eingeschaltet und für die restliche Zeit der Periodendauer Tper des nachfolgenden Schaltzyklus T1 ausgeschaltet wird; und
- der positivspannungsseitige Transistorschalter (S3) der ausgangsseitigen Halbbrückenschaltung (H2) vom Anfang des Schaltzyklus T1 für die erste Einschaltdauer tein_S4 ausgeschaltet und für die restliche Zeit der Periodendauer Tper des nachfolgenden Schaltzyklus T1 eingeschaltet wird;
- wobei für die erste Einschaltdauer tein_S4 gelten:

$$\text{tein\_S4} = \frac{2 \cdot L \cdot (\text{Istart1a} - \text{IL\_avg\_soll}) \cdot [U2 \cdot (1 + \Delta DC) - U1]}{U1 \cdot (U1 - U2)}$$ , bei IL_avg_soll >= 0 Ampere, oder

$$\text{tein\_S4} = \frac{2 \cdot L \cdot (\text{Istart1b} - \text{IL\_avg\_soll}) \cdot [U1 - U2 \cdot (1 + \Delta DC)]}{U1 \cdot (U1 - U2)}$$ , bei IL_avg_soll < 0 Ampere.

9. Verfahren nach Anspruch 8, wobei die Periodendauer Tper für den jeweiligen nachfolgenden Schaltzyklus T1 anhand folgender Gleichungen ermittelt wird:

$$Tper = \frac{2 \cdot L \cdot U2 \cdot (Istart1a - IL\_avg\_soll)}{U1 \cdot (U1 - U2)}$$ , bei IL_avg_soll >= 0 Ampere,

oder

$$Tper = \frac{2 \cdot L \cdot U2 \cdot (IL\_avg\_soll - Istart1b)}{U1 \cdot (U1 - U2)}$$ , bei IL_avg_soll < 0 Ampere.

**10.** Verfahren nach Ansprüchen 1, 2 und 7, wobei bei einem Verhältnis zwischen der gemessenen Eingangsspannung (U1) und der gemessenen Ausgangsspannung (U2):
k2*U1 <= U2 <= k1*U1, wobei gelten k2 <= 1, insb. k2 = 0.8, und k1 >= 1, insb. k1 = 1.2, dass in dem nachfolgenden Schaltzyklus T1,

- der positivspannungsseitige Transistorschalter (S1) der eingangsseitigen Halbbrückenschaltung (H1) und der negativspannungsseitige Transistorschalter (S4) der ausgangsseitigen Halbbrückenschaltung (H2) vom Anfang des Schaltzyklus T1 für eine zweite Einschaltdauer tein_S4 eingeschaltet und für die restliche Zeit der Periodendauer Tper des nachfolgenden Schaltzyklus T1 ausgeschaltet werden,
- der negativspannungsseitige Transistorschalter (S2) der eingangsseitigen Halbbrückenschaltung (H1) und der positivspannungsseitige Transistorschalter (S3) der ausgangsseitigen Halbbrückenschaltung (H2) vom Anfang des Schaltzyklus T1 für die zweite Einschaltdauer tein_S4 ausgeschaltet und für die restliche Zeit der Periodendauer Tper des nachfolgenden Schaltzyklus T1 eingeschaltet werden,
- wobei für die zweite Einschaltdauer tein_S4 gelten:

$$tein\_S4 = \frac{2 \cdot L \cdot (IL\_avg\_soll - Istart2a) \cdot [U2 + (U1 + U2) \cdot \Delta DC]}{U1 \cdot U2}$$ , bei IL avg soll >= 0 Ampere, oder

$$tein\_S4 = \frac{2 \cdot L \cdot [(U1 + U2) \cdot \Delta DC + U2] \cdot (Istart2b - IL\_avg\_soll)}{U1 \cdot U2}$$ , bei IL avg soll < 0 Ampere.

**11.** Verfahren nach Anspruch 10, wobei die Periodendauer Tper für den jeweiligen nachfolgenden Schaltzyklus T1 anhand folgender Gleichungen ermittelt wird:

$$Tper = \frac{2 \cdot L \cdot (IL\_avg\_soll - Istart2a) \cdot (U1 + U2)}{U1 \cdot U2}$$ , bei IL avg soll >= 0 Ampere,

oder

$$Tper = \frac{2 \cdot L \cdot (Istart2b - IL\_avg\_soll) \cdot (U1 + U2)}{U1 \cdot U2}$$ , bei IL_avg_soll < 0 Ampere.

**12.** Verfahren nach Ansprüchen 1, 2 und 7, wobei bei einem Verhältnis zwischen der gemessenen Eingangsspannung (U1) und der gemessenen Ausgangsspannung (U2):
U2 < k2*U1, wobei gilt k2 < 1, insb. k2 = 0.8, dass in dem nachfolgenden Schaltzyklus T1,

- der positivspannungsseitige Transistorschalter (S3) der ausgangsseitigen Halbbrückenschaltung (H2) durchgehend eingeschaltet (dauerhaft, high_' geschaltet) wird,
- der negativspannungsseitige Transistorschalter (S4) der ausgangsseitigen Halbbrückenschaltung (H2) durchgehend ausgeschaltet (dauerhaft, low_' geschaltet) wird,
- der positivspannungsseitige Transistorschalter (S1) der eingangsseitigen Halbbrückenschaltung (H1) vom Anfang des Schaltzyklus T1 für eine dritte Einschaltdauer tein_S1 eingeschaltet und für die restliche Zeit der Periodendauer Tper des nachfolgenden Schaltzyklus T1 ausgeschaltet wird, und
- der negativspannungsseitige Transistorschalter (S2) der eingangsseitigen Halbbrückenschaltung (H1) vom Anfang des Schaltzyklus T1 für die dritte Einschaltdauer tein_S1 ausgeschaltet und für die restliche Zeit der Periodendauer Tper des nachfolgenden Schaltzyklus T1 eingeschaltet wird,
- wobei für die dritte Einschaltdauer tein_S1 gelten:

$$\text{tein\_S1} = \frac{2 \cdot L \cdot (\text{IL\_avg\_soll} - \text{Istart3a}) \cdot (U1 \cdot \Delta DC + U2)}{U2 \cdot (U1 - U2)} \quad , \text{ bei IL\_avg\_soll} >= 0$$

Ampere, oder

$$\text{tein\_S1} = \frac{2 \cdot L \cdot (\text{Istart3b} - \text{IL\_avg\_soll}) \cdot (U1 \cdot \Delta DC + U2)}{U2 \cdot (U1 - U2)} \quad , \text{ bei IL\_avg\_soll} < 0$$

Ampere.

13. Verfahren nach Anspruch 12, wobei die Periodendauer Tper für den jeweiligen nachfolgenden Schaltzyklus T1 anhand folgender Gleichungen ermittelt wird:

$$\text{Tper} = \frac{2 \cdot L \cdot U1 \cdot (\text{Istart3a} - \text{IL\_avg\_soll})}{U2 \cdot (U2 - U1)} \quad , \text{ bei IL\_avg\_soll} >= 0 \text{ Ampere,}$$

oder

$$\text{Tper} = \frac{2 \cdot L \cdot U1 \cdot (\text{IL\_avg\_soll} - \text{Istart3b})}{U2 \cdot (U2 - U1)} \quad , \text{ bei IL\_avg\_soll} < 0 \text{ Ampere.}$$

14. Spannungswandler (SW) zur bidirektionalen Spannungswandlung, umfassend:

- eine eingangsseitige Halbbrückenschaltung (H1) mit jeweils einem positivspannungsseitigen (S1) und einem negativspannungsseitigen (S2) zueinander in Reihe geschalteten Transistorschalter;
- eine ausgangsseitige Halbbrückenschaltung (H2) mit jeweils einem positivspannungsseitigen (S3) und einem negativspannungsseitigen (S4) zueinander in Reihe geschalteten Transistorschalter;
- einen Brückenzweig (BZ) mit einer Brückeninduktivität (L) ;
- eine Messanordnung (A, V1, V2), die eingerichtet ist, für einen jeweiligen nachfolgenden Schaltzyklus T1 der Transistorschalter (S1, S2, S3, S4) über einen jeweilien aktuellen Schaltzyklus T0 eine Eingangsspannung (U1) an der eingangsseitigen Halbbrückenschaltung (H1), eine Ausgangsspannung (U2) an der ausgangsseitigen Halbbrückenschaltung (H2) und einen durch den Brückenzweig (BZ) fließenden Brückenstrom (IL) über den gesamten zu aktuellen Schaltzyklus T0 zu messen;
- eine Ermittlungsanordnung (EA), die eingerichtet ist, aus dem gemessenen Brückenstrom (IL) einen Brückenstrom-Istmittelwert IL_avg_mess zu ermitteln und aus dem Brückenstrom-Istmittelwert IL_avg_mess Einschaltzeitpunkte und Einschaltdauern der jeweiligen Transistorschalter (S1, S2, S3, S4) für den jeweiligen nachfolgenden Schaltzyklus T1 zu ermitteln;
- eine Steueranordnung (GT1, GT2, GT3, GT4), die eingerichtet ist, in dem jeweiligen nachfolgenden Schaltzyklus T1 die jeweiligen Transistorschalter (S1, S2, S3, S4) zu den jeweiligen ermittelten Einschaltzeitpunkten und für die jeweiligen ermittelten Einschaltdauern einzuschalten,
**dadurch gekennzeichnet, dass**
- die Ermittlungsanordnung (EA) ferner eingerichtet ist, in dem jeweiligen aktuellen Schaltzyklus T0 ferner einen Brückenstrom-Momentanwert Istart1a, Istart1b; Istart2a, Istart2b; Istart3a, Istart3b des Brückenstromes (IL) zu ermitteln, der zum Zeitpunkt durch den Brückenzweig (BZ) fließen soll, zu dem einer der Transistorschalter (S1, S2, S3, S4) von einem eingeschalteten Zustand in einen ausgeschalteten Zustand umgeschaltet wird; und
- die Ermittlungsanordnung (EA) ferner eingerichtet ist, in Abhängigkeit der Eingangsspannung (U1) und der Ausgangsspannung (U2) die Einschaltzeitpunkten und die Einschaltdauern ferner mit dem ermittelten Brückenstrom-Momentanwert Istart1a, Istart1b; Istart2a, Istart2b; Istart3a, Istart3b zu ermitteln.

**Claims**

1. Method for the operation of a bidirectional voltage converter (SW) that comprises an input-side half-bridge circuit (H1) with respectively a positive-voltage-side (S1) and a negative-voltage-side (S2) transistor switch connected in series with one another, an output-side half-bridge circuit (H2) with respectively a positive-voltage-side (S3) and a negative-voltage-side (S4) transistor switch connected in series with one another, and a bridge branch (BZ) with a bridge inductance (L);

   - wherein an input voltage (U1) at the input-side half-bridge circuit (H1) and an output voltage (U2) at the output-side half-bridge circuit (H2) are measured;
   - wherein for a respective subsequent switching cycle T1 of the transistor switches (S1, S2, S3, S4) in a respective current switching cycle T0, an actual mean bridge current value IL_avg_mess of a bridge current (IL) flowing through the bridge branch (BZ) is ascertained;
   - wherein with the actual mean bridge current value IL_avg_mess ascertained switch-on time points and switch-on durations of the respective transistor switches (S1, S2, S3, S4) for the respective subsequent switching cycle T1 are ascertained;
   - wherein the respective transistor switches (S1, S2, S3, S4) are switched on at the respective ascertained switch-on time points and for the respective ascertained switch-on durations in the respective subsequent switching cycle T1,
   **characterized in that**
   - an instantaneous bridge current value Istart1a, Istart1b; Istart2a, Istart2b; Istart3a, Istart3b of the bridge current (IL) is furthermore ascertained in the respective current switching cycle T0, which bridge current should flow through the bridge branch (BZ) at the time at which one of the transistor switches (S1, S2, S3, S4) is switched over from a switched-on state into a switched-off state; and
   - the switch-on time points and the switch-on durations are furthermore ascertained with the ascertained instantaneous bridge current value Istart1a, Istart1b; Istart2a, Istart2b; Istart3a, Istart3b on the basis of the input voltage (U1) and the output voltage (U2).

2. Method according to Claim 1, wherein the switch-on time points and the switch-on durations are furthermore ascertained with a predefined mean setpoint bridge current value IL_avg_soll.

3. Method according to Claim 2, wherein a current difference ΔI between the ascertained actual mean bridge current value IL_avg_mess and the specified mean setpoint bridge current value IL_avg_soll is calculated, and a duty cycle correction value ΔDC is calculated with the current difference ΔI, and the switch-on time points and the switch-on durations are furthermore ascertained with the calculated duty cycle correction value ΔDC.

4. Method according to one of the preceding claims, wherein the instantaneous bridge current value Istart1a, Istart1b; Istart2a, Istart2b; Istart3a, Istart3b is ascertained from the bridge inductance (L) and the charge transfer capacitances of the transistor switches (S1, S2, S3, S4).

5. Method according to Claim 4, wherein with the instantaneous bridge current value Istart1a, Istart1b; Istart2a, Istart2b; Istart3a, Istart3b a period duration is ascertained in the respective subsequent switching cycle T1, and the transistor switches (S1, S2, S3, S4) are switched on or off in the respective subsequent switching cycle T1 for the ascertained period duration.

6. Method according to Claims 2 and 5, wherein the period duration is furthermore ascertained with the actual mean bridge current value IL_avg_mess.

7. Method according to one of the preceding claims, wherein

   - the input voltage (U1) is measured at the input-side half-bridge circuit (H1) and the output voltage (U2) is measured at the output-side half-bridge circuit (H2) in the respective current switching cycle T0;
   - the input voltage (U1) and the output voltage (U2) are compared with one another; and
   - the switch-on time points, the switch-on durations and/or the period duration are ascertained depending on the result of the comparison between the input voltage (U1) and the output voltage (U2).

8. Method according to Claims 1, 2 and 7, wherein, with a relationship between the measured input voltage (U1) and the measured output voltage (U2):

U2 > k1*U1, wherein k1 > 1, in particular k1 = 1.2, in the subsequent switching cycle T1,

- the positive-voltage-side transistor switch (S1) of the input-side half-bridge circuit (H1) is switched on continuously (continuously switched 'high');
- the negative-voltage-side transistor switch (S2) of the input-side half-bridge circuit (H1) is switched off continuously (continuously switched 'low');
- the negative-voltage-side transistor switch (S4) of the output-side half-bridge circuit (H2) is switched on from the beginning of switching cycle T1 for a first switch-on duration tein S4, and switched off for the remaining time of the period duration Tper of the subsequent switching cycle T1; and
- the positive-voltage-side transistor switch (S3) of the output-side half-bridge circuit (H2) is switched off from the beginning of switching cycle T1 for the first switch-on duration tein_S4, and switched on for the remaining time of the period duration Tper of the subsequent switching cycle T1;
- wherein for the first switch-on duration tein_S4 the following apply:

$$tein\_S4 = \frac{2 \cdot L \cdot (Istart Ia - IL\_avg\_soll) \cdot [U2 \cdot (1 + \Delta DC) - U1]}{U1 \cdot (U1 - U2)}, \quad \text{with}$$

IL_avg_soll >= 0 amperes, or

$$tein\_S4 = \frac{2 \cdot L \cdot (Istart Ib - IL\_avg\_soll) \cdot [U1 - U2 \cdot (1 + \Delta DC)]}{U1 \cdot (U1 - U2)}, \quad \text{with}$$

IL_avg_soll < 0 amperes.

9. Method according to Claim 8, wherein the period duration Tper for the respective subsequent switching cycle T1 is ascertained on the basis of the following equations:

$$Tper = \frac{2 \cdot L \cdot U2 \cdot (Istart Ia - IL\_avg\_soll)}{U1 \cdot (U1 - U2)}, \quad \text{with} \quad IL\_avg\_soll \ >= \ 0$$

amperes, or

$$Tper = \frac{2 \cdot L \cdot U2 \cdot (IL\_avg\_soll - Istart Ib)}{U1 \cdot (U1 - U2)}, \quad \text{with} \quad IL\_avg\_soll \ < \ 0$$

amperes.

10. Method according to Claims 1, 2 and 7, wherein, with a relationship between the measured input voltage (U1) and the measured output voltage (U2):
k2*U1 <= U2 <= k1*U1, where k2 <= 1, in particular k2 = 0.8, and k1 >= 1, in particular k1 = 1.2, that in the subsequent switching cycle T1,

- the positive-voltage-side transistor switch (S1) of the input-side half-bridge circuit (H1) and the negative-voltage-side transistor switch (S4) of the output-side half-bridge circuit (H2) are switched on from the beginning of switching cycle T1 for a second switch-on duration tein S4, and are switched off for the remaining time of the period duration Tper of the subsequent switching cycle T1,
- the negative-voltage-side transistor switch (S2) of the input-side half-bridge circuit (H1) and the positive-voltage-side transistor switch (S3) of the output-side half-bridge circuit (H2) are switched off from the beginning of switching cycle T1 for the second switch-on duration tein_S4, and are switched on for the remaining time of the period duration Tper of the subsequent switching cycle T1,
- wherein for the second switch-on duration tein_S4 the following apply:

$$tein\_S4 = \frac{2 \cdot L \cdot (IL\_avg\_soll - Istart2a) \cdot [U2 + (U1 + U2) \cdot \Delta DC]}{U1 \cdot U2}$$, with

`IL_avg_soll >= 0 amperes, or`

$$tein\_S4 = \frac{2 \cdot L \cdot [(U1 + U2) \cdot \Delta DC + U2] \cdot (Istart2b - IL\_avg\_soll)}{U1 \cdot U2}$$, with

`IL_avg_soll < 0 amperes.`

11. Method according to Claim 10, wherein the period duration Tper for the respective subsequent switching cycle T1 is ascertained on the basis of the following equations:

$$Tper = \frac{2 \cdot L \cdot (IL\_avg\_soll - Istart2a) \cdot (U1 + U2)}{U1 \cdot U2}$$, with `IL_avg_soll >= 0`
`amperes, or`

$$Tper = \frac{2 \cdot L \cdot (Istart2b - IL\_avg\_soll) \cdot (U1 + U2)}{U1 \cdot U2}$$, with `IL_avg_soll < 0`
`amperes.`

12. Method according to Claims 1, 2 and 7, wherein, with a relationship between the measured input voltage (U1) and the measured output voltage (U2):
U2 < k2*U1, where k2 < 1, in particular k2 = 0.8, that in the subsequent switching cycle T1,

- the positive-voltage-side transistor switch (S3) of the output-side half-bridge circuit (H2) is switched on continuously (continuously switched 'high'),
- the negative-voltage-side transistor switch (S4) of the output-side half-bridge circuit (H2) is switched off continuously (continuously switched 'low'_),
- the positive-voltage-side transistor switch (S1) of the input-side half-bridge circuit (H1) is switched on from the beginning of switching cycle T1 for a third switch-on duration tein_S1, and is switched off for the remaining time of the period duration Tper of the subsequent switching cycle T1, and
- the negative-voltage-side transistor switch (S2) of the input-side half-bridge circuit (H1) is switched off from the beginning of switching cycle T1 for the third switch-on duration tein_S1, and is switched on for the remaining time of the period duration Tper of the subsequent switching cycle T1,
- wherein for the third switch-on duration tein_S1 the following apply:

$$tein\_S1 = \frac{2 \cdot L \cdot (IL\_avg\_soll - Istart3a) \cdot (U1 \cdot \Delta DC + U2)}{U2 \cdot (U1 - U2)}$$, with

`IL_avg_soll >= 0 amperes, or`

$$tein\_S1 = \frac{2 \cdot L \cdot (Istart3b - IL\_avg\_soll) \cdot (U1 \cdot \Delta DC + U2)}{U2 \cdot (U1 - U2)}$$, with

`IL_avg_soll < 0 amperes.`

13. Method according to Claim 12, wherein the period duration Tper for the respective subsequent switching cycle T1 is ascertained on the basis of the following equations:

$$Tper = \frac{2 \cdot L \cdot U1 \cdot (Istart3a - IL\_avg\_soll)}{U2 \cdot (U2 - U1)}$$ , with IL_avg_soll >= 0 amperes, or

$$Tper = \frac{2 \cdot L \cdot U1 \cdot (IL\_avg\_soll - Istart3b)}{U2 \cdot (U2 - U1)}$$ , with IL_avg_soll < 0 amperes.

**14.** Voltage converter (SW) for bidirectional voltage conversion, comprising:

- an input-side half-bridge circuit (H1) with respectively a positive-voltage-side (S1) and a negative-voltage-side (S2) transistor switch connected in series with one another;
- an output-side half-bridge circuit (H2) with respectively a positive-voltage-side (S3) and a negative-voltage-side (S4) transistor switch connected in series with one another;
- a bridge branch (BZ) with a bridge inductance (L) ;
- a measuring arrangement (A, V1, V2) that is configured to measure an input voltage (U1) at the input-side half-bridge circuit (H1), an output voltage (U2) at the output-side half-bridge circuit (H2) and a bridge current (IL) flowing through the bridge branch (BZ) over the entire current switching cycle T0 for a respective subsequent switching cycle T1 of the transistor switches (S1, S2, S3, S4) during a respective current switching cycle T0;
- an ascertainment arrangement (EA) that is configured to ascertain an actual mean bridge current value IL_avg_mess from the measured bridge current (IL) and to ascertain switch-on time points and switch-on durations of the respective transistor switches (S1, S2, S3, S4) for the respective subsequent switching cycle T1 from the actual mean bridge current value IL_avg_mess;
- a control arrangement (GT1, GT2, GT3, GT4) that is configured to switch the respective transistor switches (S1, S2, S3, S4) on at the respective ascertained switch-on time points and for the respective ascertained switch-on durations in the respective subsequent switching cycle T1,
**characterized in that**
- the ascertainment arrangement (EA) is furthermore configured to ascertain an instantaneous bridge current value Istart1a, Istart1b; Istart2a, Istart2b; Istart3a, Istart3b of the bridge current (IL) in the respective current switching cycle T0, which bridge current should flow through the bridge branch (BZ) at the time at which one of the transistor switches (S1, S2, S3, S4) is switched over from a switched-on state into a switched-off state; and
- the ascertainment arrangement (EA) is furthermore configured to ascertain the switch-on time points and the switch-on durations with the ascertained instantaneous bridge current value Istart1a, Istart1b; Istart2a, Istart2b; Istart3a, Istart3b on the basis of the input voltage (U1) and the output voltage (U2).

**Revendications**

**1.** Procédé d'exploitation d'un convertisseur de tension bidirectionnel (SW) qui comprend un circuit en demi-pont côté entrée (H1) doté respectivement d'un commutateur de transistor côté tension positive (S1) et d'un commutateur de transistor côté tension négative (S2), connectés en série, un circuit en demi-pont côté sortie (H2) doté respectivement d'un commutateur de transistor côté tension positive (S3) et d'un commutateur de transistor côté tension négative (S4), connectés en série, ainsi qu'une branche de pont (BZ) dotée d'une inductance de pont (L) ;

- une tension d'entrée (U1) étant mesurée au circuit en demi-pont côté entrée (H1) et une tension de sortie (U2) étant mesurée au circuit en demi-pont côté sortie (H2) ;
- dans lequel, pour un cycle de commutation consécutif T1 respectif du commutateur de transistor (S1, S2, S3, S4) dans un cycle de commutation actuel T0 respectif, une moyenne réelle de courant de pont IL_avg_mess d'un courant de pont (IL) passant par la branche de pont (BZ) est déterminée ;
- dans lequel, à l'aide de la moyenne réelle de courant de pont IL_avg_mess déterminée, des temps de fermeture et des durées de fermeture des commutateurs de transistor (S1, S2, S3, S4) respectifs sont déterminés pour le cycle de commutation consécutif T1 respectif ;
- les commutateurs de transistor (S1, S2, S3, S4) respectifs étant fermés dans le cycle de commutation consécutif T1 respectif aux temps de fermeture déterminés respectifs et pendant les durées de fermeture déterminées respectives,

**caractérisé en ce que**

- dans le cycle de commutation actuel T0 respectif, on détermine en outre une valeur instantanée de courant de pont Istart1a, Istart1b ; Istart2a, Istart2b ; Istart3a, Istart3b du courant de pont (IL) qui doit passer par la branche de pont (BZ) au moment où l'un des commutateurs de transistor (S1, S2, S3, S4) est commuté d'un état fermé à un état ouvert ; et

- en fonction de la tension d'entrée (U1) et de la tension de sortie (U2), les temps de fermeture et les durées de fermeture sont déterminés en outre à l'aide de la valeur instantanée de courant de pont Istart1a, Istart1b ; Istart2a, Istart2b ; Istart3a, Istart3b déterminée.

2. Procédé selon la revendication 1, les temps de fermeture et les durées de fermeture étant en outre déterminés à l'aide d'une moyenne théorique de courant de pont IL_avg_soll prédéfinie.

3. Procédé selon la revendication 2, dans lequel entre la moyenne réelle de courant de pont IL_avg_mess déterminée et la moyenne théorique de courant de pont IL_avg_soll prédéfinie, une différence de courant $\Delta I$ est calculée, et une valeur de correction de rapport cyclique $\Delta DC$ est calculée à l'aide de la différence de courant $\Delta I$, et les temps de fermeture et les durées de fermeture sont en outre déterminés à l'aide de la valeur de correction de rapport cyclique $\Delta DC$ calculée.

4. Procédé selon l'une quelconque des revendications précédentes, dans lequel la valeur instantanée de courant de pont Istart1a, Istart1b ; Istart2a, Istart2b ; Istart3a, Istart3b est déterminée à partir de l'inductance de pont (L) et des capacités de transfert des commutateurs de transistor (S1, S2, S3, S4) .

5. Procédé selon la revendication 4, dans lequel, à l'aide de la valeur instantanée de courant de pont Istart1a, Istart1b ; Istart2a, Istart2b ; Istart3a, Istart3b, une durée de période dans le cycle de commutation consécutif T1 respectif est déterminée, et les commutateurs de transistor (S1, S2, S3, S4) dans le cycle de commutation consécutif T1 respectif sont fermés ou ouverts pendant la durée de période déterminée.

6. Procédé selon les revendications 2 et 5, dans lequel la durée de période est en outre déterminée à l'aide de la moyenne réelle de courant de pont IL_avg_mess.

7. Procédé selon l'une quelconque des revendications précédentes, dans lequel

- dans le cycle de commutation actuel T0 respectif, la tension d'entrée (U1) au circuit en demi-pont côté entrée (H1) et la tension de sortie (U2) au circuit en demi-pont côté sortie (H2) sont mesurées ;

- la tension d'entrée (U1) et la tension de sortie (U2) sont comparées l'une à l'autre ; et

- en fonction du résultat de comparaison entre la tension d'entrée (U1) et la tension de sortie (U2), les temps de fermeture, les durées de fermeture et/ou la durée de période sont déterminés.

8. Procédé selon les revendications 1, 2 et 7, dans lequel, pour un rapport entre la tension d'entrée (U1) mesurée et la tension de sortie (U2) mesurée : U2 > k1*U1, où k1 > 1, en particulier k1 = 1,2, dans le cycle de commutation consécutif T1,

- le commutateur de transistor côté tension positive (S1) du circuit en demi-pont côté entrée (H1) est fermé en continu (commuté sur « high » en continu) ;

- le commutateur de transistor côté tension négative (S2) du circuit en demi-pont côté entrée (H1) est ouvert en continu (commuté sur « low » en continu) ;

- le commutateur de transistor côté tension négative (S4) du circuit en demi-pont côté sortie (H2) est fermé depuis le début du cycle de commutation T1 pendant une première durée de fermeture tein_S4 et est ouvert pendant le reste du temps de la durée de période Tper du cycle de commutation consécutif T1 ; et

- le commutateur de transistor côté tension positive (S3) du circuit en demi-pont côté sortie (H2) est ouvert depuis le début du cycle de commutation T1 pendant la première durée de fermeture tein_S4 et est fermé pendant le reste du temps de la durée de période Tper du cycle de commutation consécutif T1 ;

- avec les conditions suivantes pour la première durée de fermeture tein_S4 :

$$tein\_S4 = \frac{2 \cdot L \cdot (Istart1a - IL\_avg\_soll) \cdot [U2 \cdot (1 + \Delta DC) - U1]}{U1 \cdot (U1 - U2)}$$

pour IL_avg_soll ≥ 0 ampère, ou

$$tein\_S4 = \frac{2 \cdot L \cdot (Istart1b - IL\_avg\_soll) \cdot [U1 - U2 \cdot (1 + \Delta DC)]}{U1 \cdot (U1 - U2)}$$

pour IL_avg_soll < 0 ampère.

**9.** Procédé selon la revendication 8, dans lequel la durée de période Tper pour le cycle de commutation consécutif T1 respectif est déterminée à l'aide des équations suivantes :

$$Tper = \frac{2 \cdot L \cdot U2 \cdot (Istart1a - IL\_avg\_soll)}{U1 \cdot (U1 - U2)}$$

pour IL_avg_soll ≥ 0 ampère, ou

$$Tper = \frac{2 \cdot L \cdot U2 \cdot (IL\_avg\_soll - Istart1b)}{U1 \cdot (U1 - U2)}$$

pour IL_avg_soll < 0 ampère.

**10.** Procédé selon les revendications 1, 2 et 7, dans lequel, pour un rapport entre la tension d'entrée (U1) mesurée et la tension de sortie (U2) mesurée : k2*U1 ≤ U2 ≤ k1*Ul, où k2 ≤ 1, en particulier k2 = 0,8, et k1 ≥ 1, en particulier k1 = 1,2, les conditions suivantes s'appliquent dans le cycle de commutation consécutif T1

- le commutateur de transistor côté tension positive (S1) du circuit en demi-pont côté entrée (H1) et le commutateur de transistor côté tension négative (S4) du circuit en demi-pont côté sortie (H2) sont fermés depuis le début du cycle de commutation T1 pendant une deuxième durée de fermeture tein S4 et sont ouverts pendant le reste du temps de la durée de période Tper du cycle de commutation consécutif T1,
- le commutateur de transistor (S2) côté tension négative du circuit en demi-pont côté entrée (H1) et le commutateur de transistor côté tension positive (S3) du circuit en demi-pont côté sortie (H2) sont ouverts depuis le début du cycle de commutation T1 pendant la deuxième durée de fermeture tein S4 et sont fermés pendant le reste du temps de la durée de période Tper du cycle de commutation consécutif T1,
avec les conditions suivantes pour la deuxième durée de fermeture tein_S4 :

$$tein\_S4 = \frac{2 \cdot L \cdot (IL\_avg\_soll - Istart2a) \cdot [U2 + (U1 + U2) \cdot \Delta DC]}{U1 \cdot U2}$$

pour IL_avg_soll ≥ 0 ampère, ou

$$tein\_S4 = \frac{2 \cdot L \cdot [(U1 + U2) \cdot \Delta DC + U2] \cdot (Istart2b - IL\_avg\_soll)}{U1 \cdot U2}$$

pour IL_avg_soll < 0 ampère.

**11.** Procédé selon la revendication 10, dans lequel la durée de période Tper pour le cycle de commutation consécutif T1 respectif est déterminée à l'aide des équations suivantes :

$$Tper = \frac{2 \cdot L \cdot (IL\_avg\_soll - Istart2a) \cdot (U1 + U2)}{U1 \cdot U2}$$

pour IL_avg_soll ≥ 0 ampère, ou

$$Tper = \frac{2 \cdot L \cdot (Istart1b - IL\_avg\_soll) \cdot (U1 + U2)}{U1 \cdot U2}$$

pour IL_avg_soll < 0 ampère.

12. Procédé selon les revendications 1, 2 et 7, dans lequel, pour un rapport entre la tension d'entrée (U1) mesurée et la tension de sortie (U2) mesurée : U2 < k2*U1, où k2 < 1, en particulier k2 = 0,8, les conditions suivantes s'appliquent dans le cycle de commutation consécutif T1,

- le commutateur de transistor côté tension positive (S3) du circuit en demi-pont côté sortie (H2) est fermé en continu (commuté sur « high » en continu),
- le commutateur de transistor côté tension négative (S4) du circuit en demi-pont côté sortie (H2) est ouvert en continu (commuté sur « low » en continu),
- le commutateur de transistor côté tension positive (S1) du circuit en demi-pont côté entrée (H1) est fermé depuis le début du cycle de commutation T1 pendant une troisième durée de fermeture tein_S1 et est ouvert pendant le reste du temps de la durée de période Tper du cycle de commutation consécutif T1, et
- le commutateur de transistor côté tension négative (S2) du circuit en demi-pont côté entrée (H1) est ouvert depuis le début du cycle de commutation T1 pendant la troisième durée de fermeture tein_S1 et est fermé pendant le reste du temps de la durée de période Tper du cycle de commutation consécutif T1,
- avec les conditions suivantes pour la troisième durée de fermeture tein_S1 :

$$tein\_S1 = \frac{2 \cdot L \cdot (IL\_avg\_soll - Istart3a) \cdot (U1 \cdot \Delta DC + U2)}{U2 \cdot (U1 - U2)}$$

pour IL_avg_soll ≥ 0 ampère, ou

$$tein\_S1 = \frac{2 \cdot L \cdot (Istart3b - IL\_avg\_soll) \cdot (U1 \cdot \Delta DC + U2)}{U2 \cdot (U1 - U2)}$$

pour IL_avg_soll < 0 ampère.

13. Procédé selon la revendication 12, dans lequel la durée de période Tper pour le cycle de commutation consécutif T1 respectif est déterminée à l'aide des équations suivantes :

$$Tper = \frac{2 \cdot L \cdot U1 \cdot (Istart3a - IL\_avg\_soll)}{U2 \cdot (U2 - U1)}$$

pour IL_avg_soll ≥ 0 ampère, ou

$$Tper = \frac{2 \cdot L \cdot U1 \cdot (IL\_avg\_soll - Istart3b)}{U2 \cdot (U2 - U1)}$$

pour IL_avg_soll < 0 ampère.

14. Convertisseur de tension (SW) destiné à la conversion de tension bidirectionnelle, comprenant :

- un circuit en demi-pont côté entrée (H1) doté respectivement d'un commutateur de transistor côté tension positive (S1) et d'un commutateur de transistor côté tension négative (S2), connectés en série ;
- un circuit en demi-pont côté sortie (H2) doté respectivement d'un commutateur de transistor côté tension positive (S3) et d'un commutateur de transistor côté tension négative (S4), connectés en série ;
- une branche de pont (BZ) dotée d'une inductance de pont (L) ;
- un agencement de mesure (A, V1, V2) qui est aménagé pour mesurer pour un cycle de commutation consécutif T1 respectif des commutateurs de transistor (S1, S2, S3, S4) pendant un cycle de commutation actuel T0 respectif une tension d'entrée (U1) au circuit en demi-pont côté entrée (H1), pour mesurer une tension de sortie (U2) au circuit en demi-pont côté sortie (H2), et pour mesurer un courant de pont (IL) passant par la branche de pont (BZ) pendant l'ensemble du cycle de commutation actuel T0 ;
- un agencement de détermination (EA) qui est aménagé pour déterminer à partir du courant de pont (IL) mesuré une moyenne réelle de courant de pont IL_avg_mess et pour déterminer à partir de la moyenne réelle de courant de pont IL_avg_mess des temps de fermeture et des durées de fermeture des commutateurs de transistor (S1, S2, S3, S4) respectifs pour le cycle de commutation consécutif T1 respectif ;
- un agencement de commande (GT1, GT2, GT3, GT4) qui est aménagé pour fermer dans le cycle de commutation consécutif T1 respectif les commutateurs de transistor (S1, S2, S3, S4) respectifs aux temps de fermeture déterminés respectifs et pendant les durées de fermeture déterminées respectives,
**caractérisé en ce que**
- l'agencement de détermination (EA) est en outre aménagé pour déterminer dans le cycle de commutation actuel T0 respectif en outre une valeur instantanée de courant de pont Istart1a, Istart1b ; Istart2a, Istart2b ; Istart3a, Istart3b du courant de pont (IL) qui doit passer par la branche de pont (BZ) au moment où l'un des commutateurs de transistor (S1, S2, S3, S4) est commuté d'un état fermé à un état ouvert ; et
- l'agencement de détermination (EA) est en outre aménagé pour déterminer en fonction de la tension d'entrée (U1) et de la tension de sortie (U2) les temps de fermeture et les durées de fermeture en outre à l'aide de la valeur instantanée de courant de pont Istart1a, Istart1b ; Istart2a, Istart2b ; Istart3a, Istart3b déterminée.

Figur

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102013218228 A1
- DE 102015219850 A1
- US 5734258 A